# EUROPÄISCHE PATENTANMELDUNG

(11) **EP 1 775 097 A1**
(43) Veröffentlichungstag der Anmeldung: **18.04.2007**
(21) Anmeldenummer: 06021396.4
(22) Anmeldetag: 12.10.2006
(51) Int. Cl.: B29C 45/73, B29C 35/00

(54) **Gerät zur Temperierung von Formwerkzeugen, beispielsweise von Spritzgießmaschinen**

(30) Priorität: 17.10.2005 DE 102005049917
(71) Anmelder: REMAK Maschinenbau GmbH, 64354 Reinheim (DE)
(72) Erfinder: Marschalek Frank, 64354 Reinheim (DE)
(74) Vertreter: Röther, Peter

(57) **Zusammenfassung**

Die Erfindung betrifft ein Gerät zur Temperierung der Formwerkzeuge von beispielsweise Sphtzgießmaschinen mit mindestens zwei Temperierkreisen (Temperierkreis 1,Temperierkreis 2), das dadurch gekennzeichnet ist, dass für die Temperierkreise eine allen Kreisen gemeinsame Vorrichtung (4) zur Erzeugung eines erwärmten Temperiermediums mit einer allen Kreisen gemeinsamen Vorrichtung (8,13) zum Impulskühlen in der Geräteeinheit kombiniert ist und dass für die Temperierkreise ein Regler für die Temperaturüberwachung und -regelung integriert ist.

## Beschreibung

Die Erfindung betrifft ein Gerät zur Temperierung von Formwerkzeugen, beispielsweise von Spritzgießmaschinen mit mindestens zwei Temperierkreisen.

Derartige Geräte sind an sich bekannt, zum Beispiel aus der DE 44 44 197 C2.
Das zu temperierende Formwerkzeug, beispielsweise einer Kunststoffspritzgießmaschine, enthält je nach Größe und Volumenverteilung des Spritzgutes mehrere Temperierkreise. Das individuelle Ansteuern der Temperiermittelventile ermöglicht eine gleichmäßige Abkühlung des Formwerkzeugs.

Durch eine Vorrichtung zur Aufheizung des Wärmemittels wird eine maximale Temperatur in die einzelnen Kreise eingespeist. Die Temperatur wird überwacht, indem die eingestellte Sollwerttemperatur mit der im Rücklauf gemessenen Ist-Temperatur verglichen wird. Weichen diese von dem konfigurierbaren Temperaturband ab, wird ein Alarm an die Übergeordnete Maschinensteuerung gegeben.

Für jeden Kreis kann dabei eine separate Sollwerttemperatur vorgegeben werden. Diese wird über ein zuschaltbares Kühlmittelventil, welches das Kühlmittel direkt in den einzelnen Kreis einspeist, geregelt.

Bekannt ist auch die Steuerung einer gezielten direkten Einspritzung von Kühlmittel (Kaltwasser), nachdem ein entsprechendes Signal von z. B. einer Spritzgießmaschine erhalten wurde und so das Kühlmittelventil aktiviert worden ist.
Dieser Modus ist als Impulskühlung bekannt und wurde bislang durch ein separates Gerät bewerkstelligt, was den apparativen Aufwand naturgemäß vergrößerte.

Die Erfindung soll die Aufgabe lösen, ein konstruktiv einfaches, kompaktes Gerät mit größtmöglicher Flexibilität und Effektivität anzubieten.

Die Erfindung löst diese Aufgabe gemäß dem kennzeichnenden Teil des Anspruchs 1 dadurch, dass für die Temperierkreise eine allen Kreisen gemeinsame Vorrichtung zur Erzeugung eines erwärmten Temperiermediums mit einer allen Kreisen gemeinsamen Vorrichtung zum Impulskühlen in der Geräteeinheit kombiniert ist und dass für die Temperierkreise ein Regler für die Temperaturüberwachung und -regelung integriert ist.

Somit ist das eigentliche Temperiergerät mit der Impulskühlung und der Temperaturüberwachung in einem Gerät zusammengefasst. Das jeweilige Steuer- und Regelprogramm, die Temperaturwerte, die Durchflussmenge, der jeweilige Maschinenstatus werden auf dem geräteeigenen Display angezeigt.

Mit Hilfe des erfindungsgemäßen Multifunktionsgerätes können bei allen Spritzgießmaschinen (auch nachrüstbar) die oben erläuterten Modi (Temperieren, Impulskühlung, Temperaturüberwachung) in mehreren Temperierkreisen ausgeführt werden.

Bei einer bevorzugten Ausführungsform des Gerätes ist gemäß Anspruch 2 vorgesehen, dass jeder Temperierkreis aus einem Kältemittelzulauf, einem Wärmernittelzulauf, welche beide hinter jeweils einem Ventil zu einer Vorlaufleitung zusammengeführt sind sowie einer Rücklaufleitung besteht, wobei in jeder Rücklaufleitung sowohl ein Temperatursensor als auch ein Durchlaufmessgerät angeordnet ist.

Dabei ist gemäß Anspruch 4 vorgesehen, dass jeweils ein Temperatursensor und ein Durchlaufmessgerät in einem Gehäuseblock zusammengefasst sind, an dem sowohl das Kaltals auch das Warmwasserventil angeordnet sind. Die Gehäuseblöcke sind modularverblockbar, so dass jede Kombination von 2 bis n Temperierkreisen möglich ist.

Das Gerät verfügt über einen Einlassstutzen für von einem Kühlgerät kommendes Kühlmittel, wobei die Kältemittelzuläufe von der gemeinsamen, von aussen ins Gerät geführten Kältemittelleitung abzweigen, die Wärmemittelzuläufe von einer gemeinsamen, von der im Gerät angeordneten Vorrichtung zur Erzeugung des erwärmten Temperierinediums abgehenden Leitung abzweigen, in der ein Temperatursensor angeordnet ist, und die Rücklaufleitungen in eine gemeinsame zum Temperierkreisanfang verlaufende Leitung münden.

Wenn, wie in Anspruch 10 vorgeschlagen, sechs Temperierkreise vorgesehen sind, wird das rückgeführte Temperiermedium über einen Wärmetauscher oder aber direkt zum Temperierkreislaufanfang geleitet.

Um die Kreisläufe in Gang zu bringen und zu halten, ist gemäß Anspruch 9 allen Temperierkreisen eine gemeinsame Pumpe zugeordnet.

In einer ersten Alternative fördert die Pumpe Umlaufmedium (Wasser) von einem Umlaufmediumbehälter zu einer Aufheizvorrichtung, von dem das aufgeheizte Medium dann zum zu temperierenden Formwerkzeug geleitet wird, von dem es dann über die Rücklaufleitung zum Behälter zurückgeführt wird.

In einer zweiten Alternative ist vorgesehen , dass Umlaufmediumbehälter und Aufheizvorrichtung eine Einheit bilden, d.h., dass das Umlaufmedium im Behälter direkt aufgeheizt wird, bevor es dann mit Hilfe der Pumpe zum Formwerkzeug transportiert wird.

Durch die Anordnung der diversen Ventile und Sensoren ist es mit Hilfe des erfindungsgemäßen Gerätes möglich, in jedem Kreis eine spezielle Temperatur zu fahren und alle Funktionen auszuüben.

Die Erfindung wird im folgenden anhand von Zeichnungen erläutert.

Es zeigen:
Fig. 1: Gerät in Seitenansicht bei geöffneter Seitenwand
Fig. 2: Fließbild bei zwei Temperierkreisen
Fig. 3: Fließbild bei mehr als zwei Temperierkreisen
Fig. 4: Ventilblock mit Sensoren
Fig. 5: Gerät gemäß Figur 1 in alternativer Ausführung

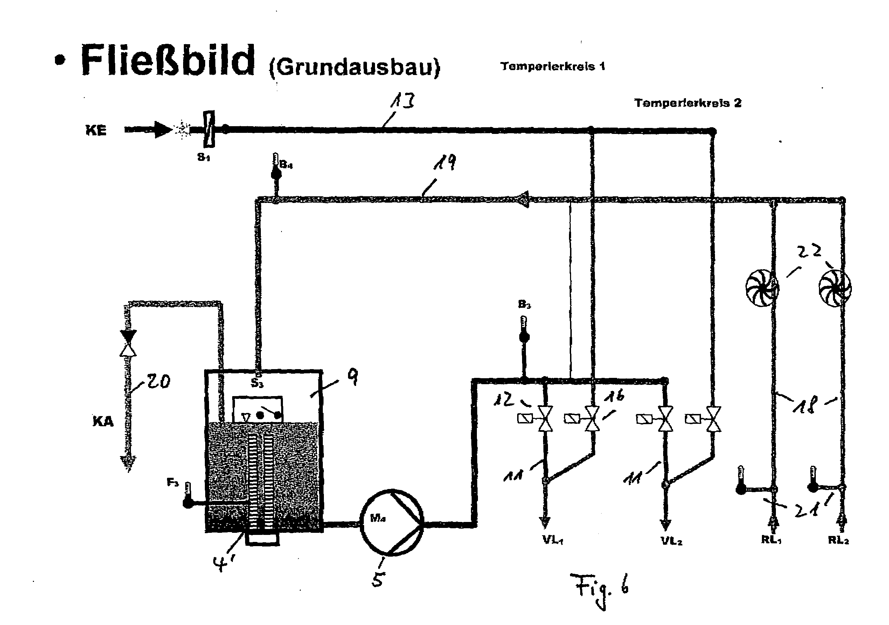

Fig. 6: Fließbild gemäß Figur 2 in alternativer Ausführung

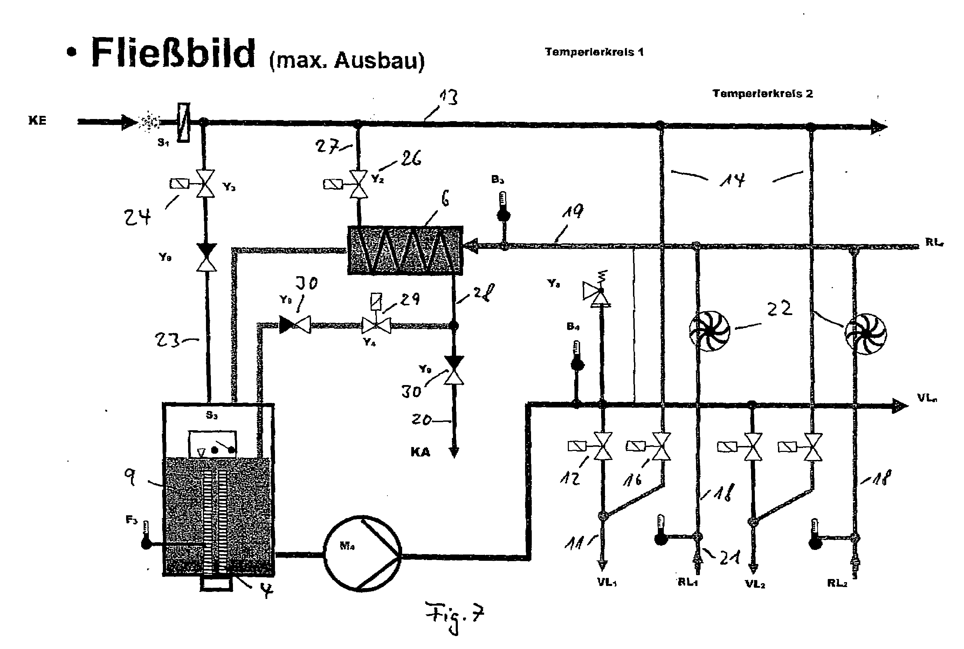

Fig. 7: Fließbild gemäß Figur 3 in alternativer Ausführung

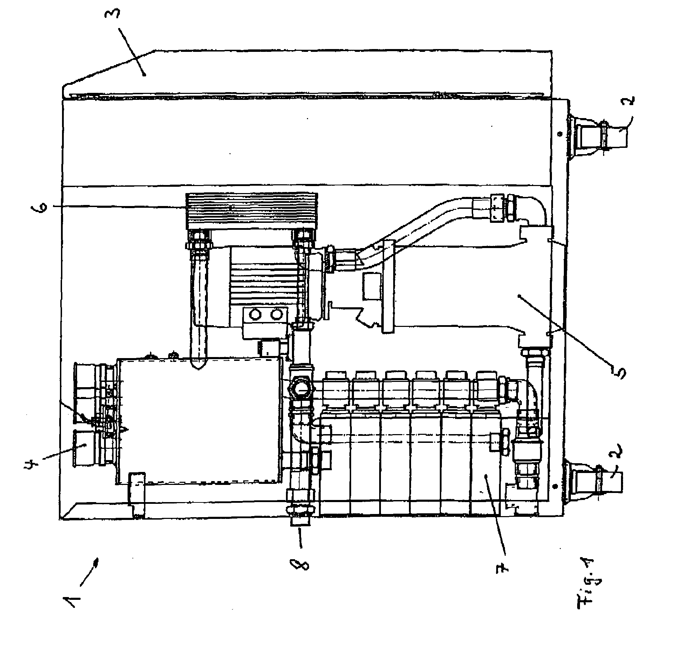

In der Fig. 1 ist ein erfindungsgemässes Gerät zur Temperierung der Formwerkzeuge von beispielsweise Kunststoffspritzgießmaschinen dargestellt und allgemein mit dem Bezugszeichen 1 versehen. In einem auf Rollen 2 verfahrbaren Gehäuse 3, von dem aus Gründen der Anschaulichkeit die Seitenwand entfernt ist, ist neben einer Vorrichtung 4 zum Aufheizen eines Temperiermediums eine Pumpe 5 und ein Wärmetauscher 6 angeordnet.

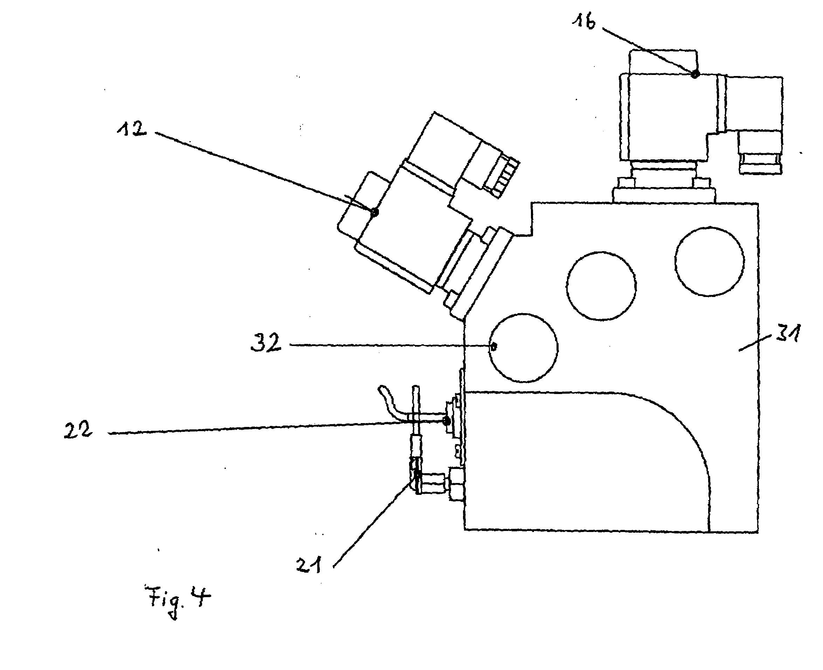

Desweiteren befinden sich im Gehäuse 3 im vorliegenden Ausführungsbeispiel sechs miteinander verblockte Ventilblöcke 7, deren Aufbau im einzelnen aus Fig. 4 hervorgeht.

Schließlich ist mit dem Bezugszeichen 8 ein Anschlussstutzen für ein von einem nicht dargestellten Kühlgerät angeliefertes Kühlmedium bezeichnet.

Ferner befinden sich in und am Gehäuse 3 nicht näher dargestellte Anschlüsse die Stromversorgung, die zur Spritzgießmaschine abgehenden und von dieser ankommenden Leitungen für die Signalübermittlung sowie ein Regler mit Display, der an der Vorderfront des Gehäuses 3 angeordnet ist.

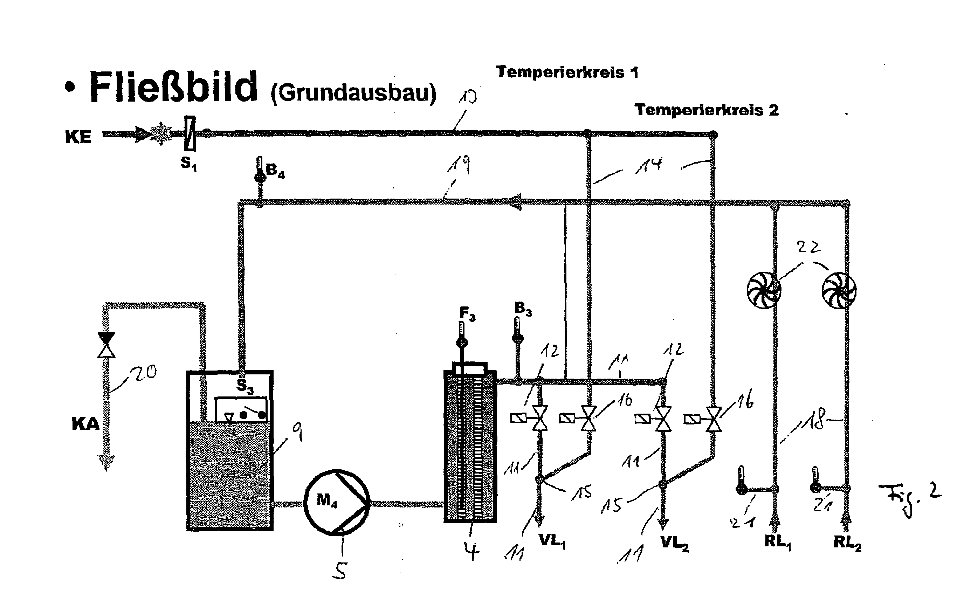

In der Figur 2 ist ein Fließbild zweier Temperierkreise dargestellt. Mit dem Bezugszeichen 9 ist ein Behälter für das zu temperierende Umlaufmedium bezeichnet. Über die Pumpe 5 wird das abgekühlte Medium in die Aufheizvorrichtung 4 befördert. Von dieser Vorrichtung 4, an der ein Temperatursensor 10 angeordnet ist, wird das erwärmte Medium in Vorlaufleitungen 11 geleitet. In den Vorlaufleitungen 11 ist jeweils ein Ventil (Warmwasserventil) 12 angeordnet.

Von außerhalb des Gehäuses 3 angeliefertes Kühlmittel gelangt über die Leitung 13 und 14 beim Punkt 15 in die Vorlaufleitungen 11. Auch in der Kühlmittelleitung 14 ist vor dem Punkt 15 ein Ventil (Kaltwasserventil) 16 angeordnet.

Die Vorlaufleitungen 11 führen zum zu temperierenden Formwerkzeug der Spritzgießmaschine, von der die mit dem Bezugszeichen 17 versehenen Rücklaufleitungen 18 über die gemeinsame Leitung 19 zum Behälter 9 für das Umlaufmedium das Temperiermedium zurückführen. Überschüssiges Temperiermedium wird über eine Leitung 20 abgeführt. In den Rücklaufleitungen 18 sind jeweils ein Temperatursensor 21 und eine Durchflussmessturbine 22 angeordnet.

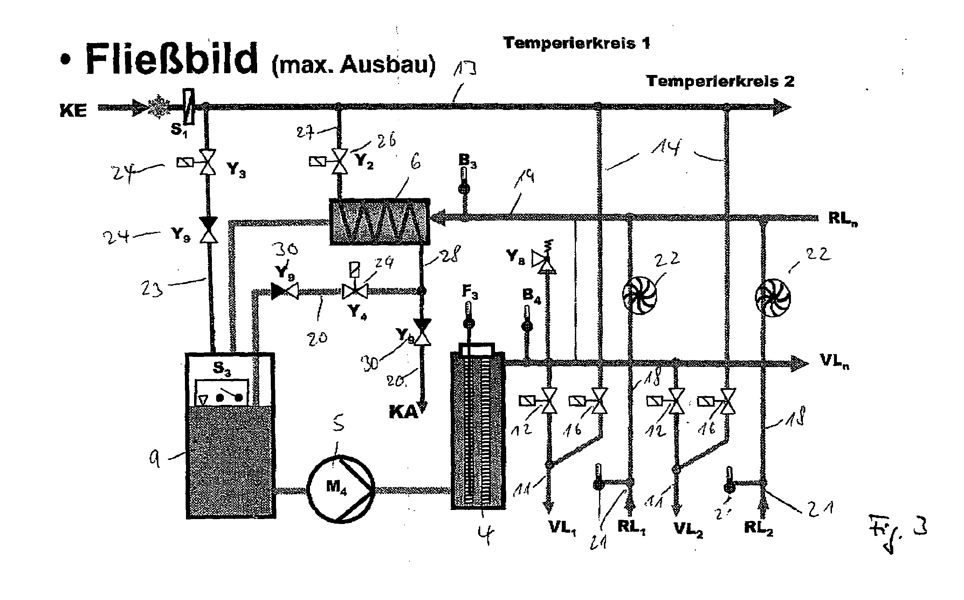

In der Figur 3 ist die in Figur 1 gezeigte maximale Ausbaustufe dargestellt. Der Index n hat im Ausführungsbeispiel den Wert 6. Gleiche Elemente sind wie in Figur 2 mit denselben Bezugszeichen versehen.

Abgesehen davon, das in Figur 3 mehr als zwei Temperierkreise angedeutet sind, unterscheidet sich dieses Ausführungsbeispiel lediglich durch den Einsatz des Wärmetauschers 6 vom Beispiel aus Figur 2. Die Rücklaufsammelleitung 19 leitet das von der Maschinen zurückkommende Medium durch den Wärmetauscher 6 zum Behälter 9. Der Behälter 9 steht über die Leitung 23, in der Ventile 24 und 25 angeordnet sind , mit der Kühlmediumleitung 13 in Verbindung., die über eine mittels Ventil 26 absperrbare Leitung 27 mit dem Wärmetauscher 6 verbunden ist, der wiederum über eine Leitung 28 mit der ebenfalls durch Ventile 29 und 30 absperrbaren Abflussleitung 20 verbunden ist.

In der Figur 4 ist in Seitenansicht ein Ventilblock 7 dargestellt. An dem Gehäuseblock 31 sind die Ventile 12 und 16 (Kalt- und Warmwasserventile) angeordnet. Mit dem Bezugszeichen 32 ist der Kanal für das rücklaufende Medium bezeichnet, an dem der Temperatursensor 21 und die Durchflussmessturbine 22 installiert sind.

Die Funktionsweise des Gerätes ergibt sich aus den Ausführungen im allgemeinen Beschreibungsteil.

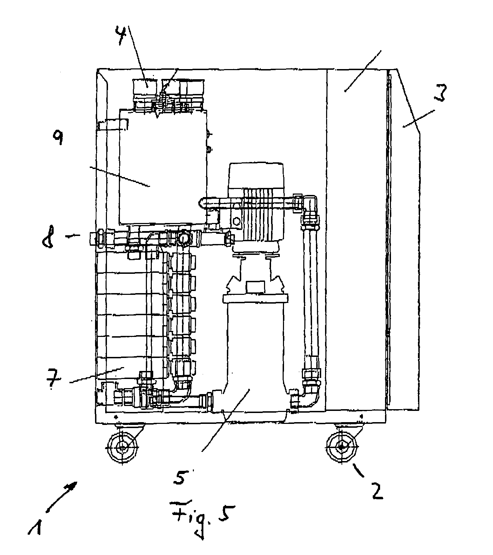

In der Figur 5 sind verglichen mit Figur 1 gleiche Teile mit gleichen Bezugszeichen versehen.

Der Unterschied bei der dort dargestellten Vorrichtung gegenüber der Vorrichtung aus Figur 1 besteht darin, dass der Behälter 9 für das Umlaufmedium mit einer Aufheizvorrichtung 4' versehen ist. Darüber hinaus fehlt hier der Wärmetauser 6.

In den Ventilblöcken 7 wird das warme mit dem von außen kommenden kalten Umlaufmedium auf die erforderliche Temperatur gemischt.

Das geht auch aus den Fließbildern 6 und 7 hervor, wobei das Fließbild 6 bzw. 7 verglichen mit Fließbild 2 bzw. 3 den eben angesprochenen Unterschied aufweist, dass nämlich Behälter 9 und Aufheizvorrichtung 4 miteinander kombiniert sind.

## Patentansprüche

1. Gerät zur Temperierung der Formwerkzeuge von beispielsweise Spritzgießmaschinen mit mindestens zwei Temperierkreisen, **dadurch gekennzeichnet, dass** für die Temperierkreise eine allen Kreisen gemeinsame Vorrichtung (4) zur Erzeugung eines erwärmten Temperiermediums mit einer allen Kreisen gemeinsamen Vorrichtung (8, 13) zum Kühlen in der Geräteeinheit (3) kombiniert ist und dass für die Temperierkreise ein Regler für die Temperaturüberwachung und -regelung integriert ist.

2. Gerät nach Anspruch 1, **dadurch gekennzeichnet, dass** jeder Temperierkreis aus einem Kältemittelzulauf (13, 14), einem Wärmemittelzulauf (11), welche beide hinter jeweils einem Ventil (12, 16) zu einer Vorlaufleitung (11) zusammengeführt sind, sowie einer Rücklaufleitung (18) besteht, wobei in jeder Rücklaufleitung (18) sowohl ein Temperatursensor (21) als auch ein Durchflussmessgerät (22) angeordnet ist.

3. Gerät nach Anspruch 1 oder 2, **dadurch gekennzeichnet, dass** die Kältemittelzuläufe von einer gemeinsamen, von aussen ins Gerät (3) geführten Kältemittelleitung (13) abzweigen, die Wärmemittelzuläufe von einer gemeinsamen, von der im Gerät (3) angeordneten Vorrichtung (4) zur Erzeugung des erwärmten Temperiermediums abgehenden Leitung abzweigen, in der ein Temperatursensor angeordnet ist, und die Rücklaufleitungen (18) in eine gemeinsame zum Temperierkreisanfang (Behälter 9) verlaufende Leitung (19) münden.

4. Gerät nach einem der Ansprüche 1 bis 3, **dadurch gekennzeichnet, dass** jeweils ein Temperatursensor (21) und ein Durchflussmessgerät (22) in einem Gehäuseblock (31) zusammengefasst sind, an dem sowohl das Kalt-(16) als auch das Warmwasserventil (12) angeordnet sind, wobei die Gehäuseblöcke (31) einzeln miteinander verblockbar sind.

5. Gerät nach Anspruch 4, **dadurch gekennzeichnet, dass** das Durchflussmessgerät (22) eine Turbine aufweist, in der ein Magnet angeordnet ist, der mit einem Hall-Effekt-Sensor wechselwirkt.

6. Gerät nach einem der Ansprüche 1 bis 5, **dadurch gekennzeichnet, dass** die von den Sensoren (21, 22, 34) ermittelten Messwerte in den Regler übermittelt, dort ausgewertet und auf einem am Gerätegehäuse (3) angeordneten Display angezeigt werden.

7. Gerät nach einem der Ansprüche 1 bis 6, **dadurch gekennzeichnet, dass** in dem Regler die Software für die Ablaufsteuerung und - regelung gespeichert ist und Schnittstellen für die Signalübermittlung von und zur Spritzgießmaschine vorgesehen sind.

8. Gerät nach einem der Ansprüche 1 bis 7, **dadurch gekennzeichnet, dass** die gemeinsame Rücklaufleitung (19) in einem Wärmetauscher (6) mündet und in ihr ein Temperatursensor (34) angeordnet ist.

9. Gerät nach einem der Ansprüche 1 bis 7, **dadurch gekennzeichnet, dass** die gemeinsame Rücklaufleitung (19) direkt im als Temperierkreisanfang definierten Behälter (9) mündet und in ihr ein Temperatursensor (34) angeordnet ist.

10. Gerät nach einem der Ansprüche 1 bis 9, **dadurch gekennzeichnet, dass** die Vorrichtung (4) zur Erzeugung des erwärmten Temperiermediums im Behälter (9) angeordnet ist.

11. Gerät nach einem der Ansprüche 1 bis 10, **dadurch gekennzeichnet, dass** allen Temperierkreisen eine gemeinsame Pumpe (5) zugeordnet ist.

12. Gerät nach einem der Ansprüche 1 bis 11, **dadurch gekennzeichnet, dass** sechs Temperierkreise vorgesehen sind.
